(19) Europäisches Patentamt
European Patent Office
Office européen des brevets

(11) EP 2 824 152 B1

(12) **EUROPEAN PATENT SPECIFICATION**

(45) Date of publication and mention of the grant of the patent:
**28.12.2016 Bulletin 2016/52**

(51) Int Cl.:
***C09D 11/324*** *(2014.01)* ***C09D 11/102*** *(2014.01)*
***C09D 11/322*** *(2014.01)*

(21) Application number: **14176273.2**

(22) Date of filing: **09.07.2014**

# (54) Ink for aqueous inkjet recording, inkjet recording method, and inkjet printed matter

Tinte für wässrige Tintenstrahlaufzeichnung, Tintenstrahlaufzeichnungsverfahren und tintenstrahlgedrucktes Material

Encre pour enregistrement à jet d'encre aqueuse, procédé d'enregistrement à jet d'encre et matière imprimée par jet d'encre

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2013 JP 2013146054**
**12.05.2014 JP 2014098426**

(43) Date of publication of application:
**14.01.2015 Bulletin 2015/03**

(73) Proprietor: **Ricoh Company, Ltd.**
**Tokyo 143-8555 (JP)**

(72) Inventors:
- **Nakagawa, Tomohiro**
**Ohta-ku, Tokyo 143-8555 (JP)**
- **Nagashima, Hidefumi**
**Ohta-ku, Tokyo 143-8555 (JP)**
- **Fujii, Ichiroh**
**Ohta-ku, Tokyo 143-8555 (JP)**
- **Toda, Naohiro**
**Ohta-ku, Tokyo 143-8555 (JP)**

(74) Representative: **Lamb, Martin John Carstairs**
**Marks & Clerk LLP**
**90 Long Acre**
**London WC2E 9RA (GB)**

(56) References cited:
**EP-A2- 2 154 210** **WO-A1-2012/124790**
**WO-A1-2014/119771** **WO-A2-2012/016125**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 824 152 B1

## Description

BACKGROUND

Technical Field

The present invention relates to an ink for aqueous inkjet recording and an inkjet recording method and an inkjet printed matter that use the ink for aqueous inkjet recording.

Background Art

Since inkjet printers are relatively quiet, enjoy low running costs, and easily capable of printing color images, they are now widely used at home as output device of digital signals.
In recent years, inkjet technologies have been appealing in business field of, for example, display, posters, and signboards in addition to home use. In such industrial use, since porous recording media have problems with regard to light resistance, water resistance, and abrasion resistance, non-porous recording media such as plastic film are used.
Accordingly, ink for such non-porous recording medium has been developed. For example, as such ink, solvent-based inkjet ink using an organic solvent as a vehicle or ultraviolet-curable inkjet ink using a polymerizable monomer as its main component have been widely used.
However, the solvent-based inkjet ink evaporates a large amount of the solvent into air, which is not preferable in terms of environmental burden. Moreover, some ultraviolet curable inkjet ink have skin sensitization potential. In addition, since an ultraviolet ray irradiator built into a printer is expensive, the application field of the solvent-based inkjet is limited.
Considering this background, development of an aqueous ink for inkjet recording that is less burden on environment and can be directly printed on a non-porous substrate (non-porous recording medium) is in progress. For example, such developments are disclosed in JP-2005-220352-A and JP-2011-94082-A. However, such aqueous ink has disadvantages with regard to image quality in comparison with a solvent-based inkjet ink.
In addition, for example, JP-2010-53328-A and JP-2012-77118-A disclose ink for aqueous inkjet recording containing polycarbonate-based urethane resin particles and JP-2012-514683-A and JP-2012-207202-A disclose pigments containing a geminalbis phosphonic acid group or a geminalbis phosphonate group.

SUMMARY

In view of the foregoing, an improved ink for aqueous inkjet recording is provided that contains water, a hydrosoluble organic solvent, a pigment, and polycarbonate-based urethane resin particles, wherein the pigment contains a geminalbis phosphonic acid group and/or a geminalbis phosphonic acid salt group.

BRIEF DESCRIPTION OF THE DRAWINGS

Various other objects, features and attendant advantages of the present invention will be more fully appreciated as the same become better understood from the detailed description when considered in connection with the accompanying drawings, in which like reference characters designate like corresponding parts throughout and wherein

FIG. 1 is a schematic diagram illustrating an example of a serial type inkjet recording device; and
FIG. 2 is a schematic diagram illustrating the structure of the device illustrated in FIG. 1.

DETAILED DESCRIPTION

The present invention is to provide ink for aqueous inkjet recording having high gloss, excellent abrasion resistance, and excellent ethanol resistance at a printed area, and excellent storage stability and discharging stability of the ink over time when an image is printed on a non-porous substrate by using the ink. The ink of the present invention is printable on various non-porous substrates, in particular, plastic film.
The present disclosure will be described below in detail with reference to several embodiments and accompanying drawings.
One of the embodiments is:

1: An ink for aqueous inkjet recording that contains water, a hydrosoluble organic solvent, a pigment, and polycarbonate-based urethane resin particles, wherein the pigment contains a geminalbis phosphonic acid group and/or a

geminalbis phosphonic acid salt group, characterized in that the polycarbonate-based urethane resin particles have a volume average particle diameter $D_{50}$ of 500 nm or less, when measured by a particle size analyzer NANOTRAC UPA-EX150, manufactured by NIKKISO CO., LTD..

The embodiment described above of the present disclosure includes the following 2 to 8. These are also described.

2: The ink for aqueous inkjet recording mentioned above, wherein the pigment contains at least one of groups represented by the following chemical formula 1 to chemical formula 4:

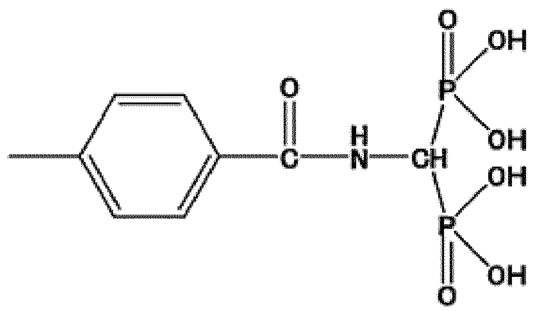

Chemical formula 1

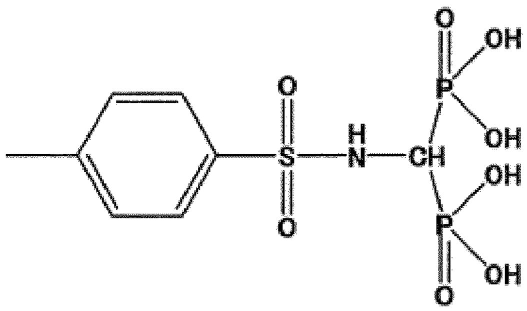

Chemical formula 2

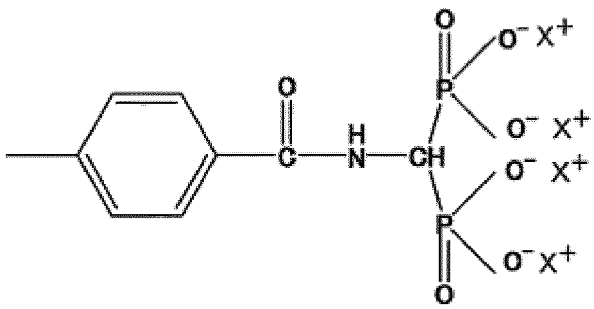

Chemical formula 3

In the chemical formula 3, $X^+$ represents $Li^+$, $K^+$, $Na^+$, $NH_4^+$, $N(CH_3)_4^+$, $N(C_2H_5)_4^+$, $N(C_3H_7)_4^+$, or $N(C_4H_9)_4^+$,

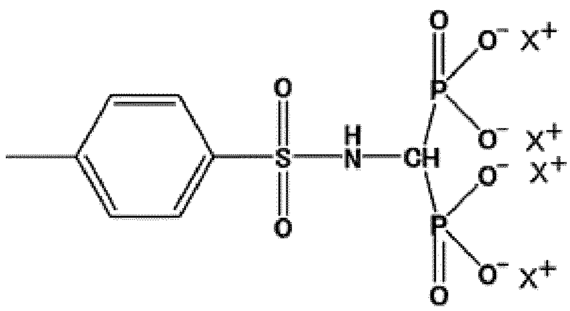

Chemical formula 4

In the chemical formula 4, $X^+$ represents $Li^+$, $K^+$, $Na^+$, $NH_4^+$, $N(CH_3)_4^+$, $N(C_2H_5)_4^+$, $N(C_3H_7)_4^+$, or $N(C_4H_9)_4^+$.

3. The ink for aqueous inkjet recording mentioned above, wherein the polycarbonate-based urethane resin particles has a structure derived from at least one kind of alicyclic diisocyanate.

4. The ink for aqueous inkjet recording mentioned above, wherein the hydrosoluble organic solvent contains at least one of 1,2-propane diol, 1,3-propane diol, 1,2-butane diol, 1,3-butane diol, and 2,3-butane diol.

5. The ink for aqueous inkjet recording mentioned above, wherein the polycarbonate-based urethane resin particles have a surface hardness of 100 $N/mm^2$ or more as a layer of the polycarbonate-based urethane resin particles is formed.

6. An inkjet recording method including printing an image with the ink for aqueous inkjet recording mentioned above.

7. The inkjet recording method mentioned above, further including heating after the step of printing.

8. An inkjet printed matter including: a recording medium; and an image formed on the recording medium by using the ink for aqueous inkjet recording mentioned above.

As a result of an investigation of resin emulsions available on the market and ink for aqueous inkjet recording using such resin emulsions by the present inventors, it was found that a layer formed by a polycarbonate-based urethane resin demonstrated an excellent layer forming performance.

This mechanism is inferred that the polycarbonate-based urethane resin has excellent water resistance, heat resistance, abrasion resistance, and weather resistance because of strong agglomerating force of carbonate group.

Although a liquid dispersion of pigment and a resin emulsion separately maintains stable dispersion statuses, the storage stability of ink is low over time when both are coexistent in the ink. Furthermore, when a head filled with ink is evaluated, intermittent discharging tends to occur.

The present inventors thought of interaction between a pigment and resin particles to solve these problems. That is, with regard to storage stability of ink, both of pigment and resin particles impair dispersability each other, resulting in increasing the probability of agglomeration. Accordingly, in such intermittent discharging, the pigment and resin particles physically become closer to each other by drying of ink at nozzle portions, resulting in interaction therebetween, which causes increase of viscosity and agglomeration.

Therefore, the present inventors have investigated compatibility of polycarbonate-based urethane resins and various pigments and found that ink having extremely excellent storage property and discharging stability is obtained when a pigment contains at least one of geminalbis phosphonic acid group or geminalbis phosphonate group.

Furthermore, the present inventors have also found that ink has extremely excellent storage stability and discharging stability when the pigment mentioned above has at least one of the groups represented by chemical formulae 1 to 4.

The compositions of the ink of the present disclosure are described next.

Polycarbonate-based Urethane Resin Particles

Polycarbonate-based urethane resin particles for use in the ink of the present disclosure are substantially insoluble to a system and have a volume average particle diameter $D_{50}$ of 500 nm or less.

In addition, the polycarbonate-based urethane resin in the present disclosure is obtained by reaction between polycarbonate polyol and polyisocyanate.

It is possible to use as the polycarbonate polyol mentioned above polyols prepared by, for example, ester exchange reaction of a carboxylic acid ester and a polyol under the presence of a catalyst or reaction between phosgene and bisphenol A.

Specific examples of the carboxylic acid ester include, but are not limited to, methyl carbonates, dimethyl carbonate, ethyl carbonate, diethyl carbonate, cyclocarbonate, and diphenyl carbonate.

Specific examples of the polyol to react with the carboxylic acid ester include, but are not limited to, low moleculr weight diol compounds such as ethylene glycol, diethylene glycol, 1,2-propylene glycol, dipropylene glycol, 1,4-butane diol, 1,5-pentane diol, 3-methyl-1,5-pentane diol, neopentyl glycol, and 1,4-cyclohexane diol; polyethylene glycol, and polypr opylene glycol.

There is no specific limit to the polyisocyanate mentioned above. Specific examples thereof include, but are not limited to, aromatic polyisocyante compounds such as 1,3-phenylene diisocyanate, 1,4-phenylene diisocyanate, 2,4-tolylene diisocyanate (TDI), 2,6-tolylene diisocyanate, 4,4'-diphenylene methane diisocyanate (MDI), 2,4-diphenyl methane diisocyanate, 4,4'-diisocynato biphenyl, 3,3'-dimethyl-4,4'-diisocyanate biphenyl, 3,3'-dimethyl-4,4'-diisocyanate, diphenyl methane, 1,5-naphtylene diisocyanate, m-isocyanate pheny sulphonyl isocyanate, p-isocyanate phenyl sulfonyl isocyanate, and p-isocyanate phenyl sulfonyl isocyante; aliphatic polyisocyanates compounds such as ethylene diisocyanate, tetramethylene diisocyanate, hexamethylene diisocyanate (HDI), dodecamethylene diisocyanate, 1,6,11-undecane triisocyanate, 2,2,4-trimethyl hexamethylene diisocyanate, lysine diisocyanate, 2,6-diisocyante methylcaproate,

bis(2-isocyanate ethyl)fumarate, bis(2-isocyanateethyl)carbonate, and 2-isocyanate ethyl-2,6-diisocyanate hexanoate; and alicyclic polycyanate compounds such as isophorone diisocyante (IPDI), 4,4'dicyclohexyl methane diisocyanate (hydrogenated MDI), cyclohexylene diisocyante, methylcyclohexylene diisocyanate (hydrogenated TDI), bis(2-isocyanateethyl)-4-dichlorohexene-1,2-dicarboxylate, 2,5-norbornane diisocyante, and 2,6-norbonane diisocyante.

These can be used alone or in combination.

The ink of the present disclosure is expected to be applied for the purpose of outdoor use such as posters or signboards, so that an applied layer having an extremely high long weather resistance is demanded. In terms of this, using aliphatic or alicyclic diisocyanates is preferable.

Furthermore, a desired layer strength is easily obtained by adding at least one kind of alicyclic diisocyanate. In particular, isophorone diisocyanate and dicyclohexyl methane diisocyanate are preferable. The content ratio of alicyclic diisocyanate is preferably 60 % by weight or more in all of the isocyanate compounds.

As for the ink of the present disclosure, it is preferable to add polycarbonate-based urethane resin particles as a resin emulsion form in which polycarbonate-based urethane resin particles are dispersed in an aqueous medium.

The resin solid portion in the resin emulsion is preferably 20 % by weight or more. When the solid portion is 20 % by weight or more, designing a recipe to prepare ink is made easy and the freedom of designing the recipe of ink is increased, so that any ink can be prepared.

The urethane resin particles preferably has an average particle diameter of from 10 nm to 350 nm in light of liquid storage stability and discharging stability when preparing ink.

In addition, when dispersing urethane resin particles in an aqueous medium, it is possible to use a forcible emulsification type using a dispersant. However, since such a dispersant tends to remain in a layer (film), thereby weakening the layer, a so-called self-emulsification type, which has anionic property in its molecule, is preferable. As for such a self-emulsification type, it preferably contains an anionic group so as to impart an acidity in the range of from 20 to 100, so that excellent abrasion resistance and chemical resistance are obtained.

In addition, specific examples of the anionic group include, but are not limited to, carboxylic acid group, a carboxylate group, a sulfonic acid group, and a sulfonate group. Of these, it is preferable to use a carboxylate group or sulfonate group part or entire of which is neutralized by a basic compound to maintain good water dispersion stability.

Specific examples of the basic compound to neutralize the anionic group include, but are not limited to, organic amines such as ammonium, triethyl amine, pyridine, morpholine, alkanol amine such as monoethanol amine, and metal salt compounds containing Na. K. Li, Ca, etc.

When using a forcible emulsification method, a nonion surfactant or anion surfactant can be used. Of these, a nonion surfactant is preferable in terms of water resistance.

Specific examples of nonion surfactants include, but are not limited to, polyoxyethylene alkyl ether, polyoxyethylene alkylene alkyl ether, polyoxyethylene derivatives, polyoxyethylene aliphatic acid esters, polyoxyethylene polol alicphatic acid ester, polyoxyethylene propylene polyol, sorbitan aliphatic acid ester, polyoxyethylene curable ricinus, polyoxyalkylene polycyclic phenyl ether, polyoxyethylene alkyl amine, alkyl alkanol amide, and polyalkylene glycol (meth)acrylate. Of these, polyoxyethylene alkyl ether, polyoxyethylene aliphatic acid esters, polyoxyethylene sorbitan aliphatic acid ester, and polyoxyethylene alkyl amine.

Specific examples of anionic surfactants include, but are not limited to, alkyl sulfuric acid ester satls, polyoxyethylene alkyl ether sulfuric acid salts, alkyl benzene sulfonic acid salts, $\alpha$-olefine sulfonic acid salts, methyl lauryl acid salts, sulfosuccinic acid salts, ether sulfonic acid salts, ether carboxylic acid salts, aliphatic acid salts, naphthalene sulfonic acid formalin condensed compounds, alkyl amine salts, quaternary ammonium salts, alkyl betaine, and alkyl amine oxide. Polyoxyethylene alkyl ether sulfuric acid salts and sulfosuccinic salts are preferable.

The addition amount of a surfactant is from 0.1 % by weight to 30 % by weight and preferably from 5 % by weight to 20 % by weight to the amount of urethane resin. When it surpasses 30 % by weight, an emulsifying agent is added excessively to form a urethane resin emulsion, thereby extremely degrading attachability and water resistance, so that when a dried layer is formed, plasticizing effect and bleeding phenomenon tend to occur, which leads to blocking. This is not preferable.

Moreover, optionally a hydrosoluble organic solvent, an antiseptic agent, a leveling agent, an antioxidant, a light stabilizer, and an ultraviolet absorbent can be blended with a urethane resin emulsion for use in ink of the present disclosure.

Polycarbonate-based urethane resin particles for use in the ink of the present disclosure can be manufactured by a typical method. For example, it can be manufactured by the following method.

First, under the presence of no solvent or an organic solvent, a urethane prepolymer having an isocyanate group at its end is prepared by reacting a polycarbonate polyol and a polyisocyanate with an equivalent ratio in which an isocyanate group is excessive.

Next, optionally the anionic groups in the urethane prepolymer having an isocyanate group at its end is neutralized by a neutralizer. Thereafter, subsequent to reaction with a chain elongating agent, the organic solvent in the system is removed to obtain polycarbonate-based urethane resin particles.

Specific examples of usable organic solvents include, but are not limited to, ketone such as aetone and methyl ethyl ketone; ethers such as tetrahydrofuran and dioxane, acetic acid esters such as ethyl acetate and buty lacetate, nitriles such as acetonitrile, dimethyl formamide, N-methyl pyrrolidone, and N-ethyl pyrrolidone. These can be used alone or in combination.

Polyamines or other compounds having active hydrogen atom are used as the chain elongating agent.

Specific examples of the polyamine include, but are not limited to, diamines such as ethylene diamine, 1,2-propane diamine, 1,6-hexamethylene diamine, piperazine, 2,5-dimethyl piperazine, isophorone diamine, 4,4'-dicyclohexyl methane diamine, 1,4-cyclohexane diamine, polyamines such as diethylene triamine, dipropylene triamine, and triethylene tetramine, hydrazines such as hydrazine, N,N'-dimethyl hydrazine, and 1,6-hexamethylene bis hydrazine; dihydrazides such as succinic acid dihydrazide, adipic acid dihydrazide, glutaric acid dihydrazide, sebacic acid dihydrazide, and isophthalic acid dihydrazide.

Specific examples of the other active hydrogen containing compounds include, but are not limited to,glycols such as ethylene glycol, diethylene glycol, triethylene glycol, propylene glycol, 1,3-propane diol, 1,3-butane diol, 1,4-butane diol, hexamethylene glycol, saccharose, methylene glycol, glycerin, and sorbitol; phenols such as bisphenol A, 4,4'-duhydroxydiphenyl, 4,4'-dihydroxydiphenyl ether, 4,4'-dihydroxydiphenyl sulfone, hydrogenated bisphenol A, and hydroquinoe, and water.

These can be used alone or in combination unless the storage stability of ink deteriorates.

If the ink of the present disclosure is heated after printing, the amount of residual solvent is decreased, thereby improving attachability, which is preferable. It is possible to heat polycarbonate-based urethane resin particles because they have excellent heat resistance. It is not always necessary that the lowest layer forming temperature of polycarbonate-based urethane resin particles is room temperature or lower. However, if heating is conducted, it is preferable that the lowest layer forming temperature is not higher than the heating temperatrue after printing.

The lowest layer forming temperature when heating is preferably from 0 °C to temperatures 5 °C or more below the heating temperature and more preferably 10 °C or more below the heating temperature. In general, the lower the lowest layer forming temperature, the better the layer forming property. However, when the lowest layer forming temperature is too low, the glass transition temperature of a resin tends to be lowered. However, the strength of a formed layer is sufficient when the lowest layer forming temperature is designed to be 0 °C or higher. Furthermore, the lowest layer forming temperature is preferably from 25 °C to a temperature 10 °C or more below the heating temperature.

The lowest layer forming temperature is the lowest temperature below which transparent continuous film is not formed when an emulsion is extended and flown on a metal plate made of such as aluminum while raising the temperature. At temperatures lower than the lowest layer forming temperature, the emulsion becomes white powder.

The polycarbonate-based urethane resin particles for use in the present disclosure preferably has a surface hardness of 80 $N/mm^2$ or higher, more preferably 90 $N/mm^2$ or higher, and furthermore preferably 100 $N/mm^2$ or higher when a layer is formed. Then the surface hardness is 80 $N/mm^2$ or greater, ink forms a strong layer, so that a better abrasion resistance is obtained. In addition, when the surface hardness is 200 $N/mm^2$ or less, a printed matter has ductility, which is preferable.

The surface hardness in the present disclosure is measured by the following method:

> After applying a polycarbonate-based urethane resin emulsion to a glass slide to form a layer having a thickness of 10 μm followed by drying at 100 °C for 30 minutes, a resin layer is formed. Using a micro surface hardness tester (FISCHERSCOPE HM2000, manufactured by Fischer Instruments K.K. Japan), the pressed-in depth when a Berkovich indenter is pressed in under a load of 9.8 mN is obtained, which is measured as Martens hardness described in ISO14577-2002.

The addition amount of the polycarbonate-based urethane resin in ink is preferably from 0.5 % by weight to 10 % by weight, more preferably from 1 % by weight to 8 % by weight, and furthermore preferably from 3 % by weight to 8 % by weight in solid portion conversion. When the addition amount is 0.5 % by weight or more, a layer is sufficiently formed to a pigment and image strength is excellent. When the addition amount is 10 % by weight or less, ink can be discharged suitably.

The ink of the present disclosure optionally contains a resin other than polycarbonate-based urethane resin particles. However, a polycarbonate-based urethane resin preferably accounts for 50 % by weight or more and more preferably 70 % by weight or more in the total amount of the resin added to ink. Specific examples of the resin other than polycarbonate-based urethane resin particles include, but are not limited to, acrylic resin particles, polyolefin resin particles, vinyl acetate resin particles, vinyl chloride resin particles, fluorine-containing resin particles, polyether-based resin particles, and polyester-based resin particles.

Pigment

In the present disclosure, a pigment is used which contains a geminalbis phosphonic acid group and/or a geminalbis phosphonate group. It is possible to use a dye in combination to adjust colors within the range in which weather resistance is not degraded.

Pigments include organic pigments and inorganic pigments. As the inorganic pigments, there are titanium oxide, iron oxide, calcium oxide, barium sulfate, aluminum hydroxide, barium yellow, cadmium red, chrome yellow, and carbon black manufactured by known methods such as contact methods, furnace methods, and thermal methods can be used.

Among carbon black, Pigment Black 7 is preferable in particular. These are available under the trade mark of Regal™, Black Pearls™, Elftex™, Monarch™, Mogul™, and Vulcan™, manufactured by Cabot Corporation. Specific examples thereof include, but are not limited to, Black Pearls 2000, 1400, 1300, 1100, 1000, 900, 880, 800, 700, and 570; Black Pearls L, Elftes 8, Monarch 1400, 1300, 1100, 1000, 900, 880, 800, and 700; Mogul L, Regal 330, 400, and 600, Vulcan P, SENSIJET Black SDP 100 (SENSIENT), SENSIJET Black SDP 1000 (SENSIENT), and SENSIJET Black SDP 2000 (SENSIJET).

Specific examples of the organic pigments include, but are not limited to, azo pigments (azo lakes, insoluble azo pigments, condensed azo pigments, chelate azo pigments, etc.), polycyclic pigments (phthalocyanine pigments, perylene pigments, perinone pigments, anthraquinone pigments, quinacridone pigments, dioxazine pigments, indigo pigments, thioindigo pigments, isoindolinone pigments, and quinofuranone pigments, etc.), dye chelates (basic dye type chelates, acid dye type chelates), nitro pigments, nitroso pigments, and aniline black can be used.

Specific examples thereof include, but are not limited to, C.I. Pigment Yellow 1, 3, 12, 13, 14, 17, 24, 34, 35, 37, 42(yellow iron oxide), 53, 55, 74, 81, 83, 95, 97, 98, 100, 101, 104, 108, 109, 110, 117, 120, 128, 139, 150, 151, 155, 153, 180, 183, 185, and 213, C.I. Pigment Orange 5, 13, 16, 17, 36, 43, and 51, C.I. Pigment Red 1, 2, 3, 5, 17, 22, 23, 31, 38, 48:2, and 48:2 (Permanent Red 2B (Ca)), 48:3, 48:4, 49:1, 52:2, 53:1, and 57:1(Brilliant Carmine 6B), 60:1, 63:1, 63:2, 64:1, 81, 83, 88, 101 (rouge), 104, 105, 106, and 108(Cadmium Red), 112, 114, 122(Quinacridone Magenta), 123, 146, 149, 166, 168, 170, 172, 177, 178, 179, 185, 190, 193, 209, and 219, C.I. Pigment Violet 1 (Rhodamine Lake), 3, 5:1, 16, 19, 23, and 38, C.I. Pigment Blue 1, 2, 15(Phthalocyanine Blue), 15:1, 15:2, and 15:3(Phthalocyanine Blue), 16, 17:1, 56, 60, and 63;C.I. Pigment Green 1, 4, 7, 8, 10, 17, 18, and 36.

A pigment can be dispersed in ink by a dispersion method using a surfactant, a dispersion method using a dispersible resin, a dispersion method by coating the surface of pigment with a resin, and a dispersion method of forming a self-dispersible pigment by introducing a hydrophilic group into the surface of pigment. Of these, the self-dispersible pigment by introducing a hydrophilic group into the surface of pigment tends to demonstrate good results.

Specific examples of anionic hydrophilic groups of self-dispersible pigments include, but are not limited to, -COOM, $-SO_3M$, $-PO_3HM$, $-PO_3M_2$, $-CONM_2$, $-SO_3NM_2$, $-NH-C_6H_4-COOM$, $-NH-C_6H_4-SO_3M$, $-NH-C_6H_4-PO_3HM$, $-NH-C_6H_4-PO_3M_2$, $-NH-C_6H_4-CONM_2$, and$-NH-C_6H_4-SO_3NM_2$. "M" represents a counter cation.

As a results of studying the relation between these hydrophilic groups and polycarbonate-based urethane resin particles, it was found that geminalbis phosphonic acid group and geminalbis phosphonate group were particularly excellent about storage stability and discharging stability.

The counter cation M for use in a pigment dispersion element is not particularly limited and includes alkali metal ions, and quaternary ammonium ion, which is particularly preferable. Specific examples of quaternary ammonium ions include, but are not limited to, tetramethyl ammonium ion, tetraethyl ammonium ion, tetrapropyl ammonium ion, tetrabutyl ammonium ion, tetra pentyl ammonium ion, benzyl trimethyl ammonium ion, benzyl triethyl ammonium ion, and tetrahexyl ammonium ion. Of these, tetraethyl ammonium ion, tetrabutyl ammonium ion, and benzyl trimethyl ammonium ion are preferable.

Quaternary ammonium ions demonstrate hydrophilicity in water-rich ink or organic-solvent-rich ink, from which moisture has evaporated, so that dispersion of pigment is stabilized.

Modification treatment of the surface of pigment is described when a geminalbis phosphonic acid group is used as an example. The modification method includes, for example, the following method A and the following method B.

Method A

10 g of carbon black, 20 mmol of the compound represented by the following chemical formula 1 or the following chemical formula 2, and 200 ml of deionized water are mixed at room temperature by a Silverson mixer at 6,000 rpm. If the thus-obtained slurry has a pH higher than 4, 20 mmol of acetic acid is added thereto. 30 minutes later, 20 mmol of sodium nitrite dissolved in a minute amount of deionized water is slowly added to the slurry. Furthermore, the system is heated to 60 °C to conduct reaction for one hour while being stirred, a pigment in which the compound represented by the following chemical formula 5 or the following chemical formula 6 is added to carbon black is produced. Thereafter, pH of the pigment is regulated by NaOH aqueous solution. 30 minutes later, a pigment dispersion element is obtained. Next, the dispersion element and deionized water are ultrafiltrated by using dialysis membrane followed by ultrasonic

dispersion to obtain a pigment dispersion element in which solid portions are condensed.

Method B

Process All 4HV mixer (4L) is filled with 500 g of dried carbon black, 1L of deionized water, and 1 mol of the compound represented by chemical formula 5 or 6. Next, the mixture is vigorously mixed at 300 rpm for 10 minutes while keeping the system at 60 °C. Thereafter, 20 % sodium nitrite aqueous solution (1 mol equivalent to the compound represented by chemical formula 5 or 6) is added in 15 minutes followed by mixing and stirring for 3 hours while keeping the system at 60 °C.

The reactant is extracted while being diluted with 750 ml of deionized water. The thus-obtained pigment dispersion element and deionized water are ultrafiltrated by dispersion element using dialysis membrane followed by ultrasonic dispersion to obtain a pigment dispersion element in which solid portions are condensed. Furthermore, if coarse particles account for a large ratio in the pigment dispersion element, it is preferable to remove these by using a centrifugal.

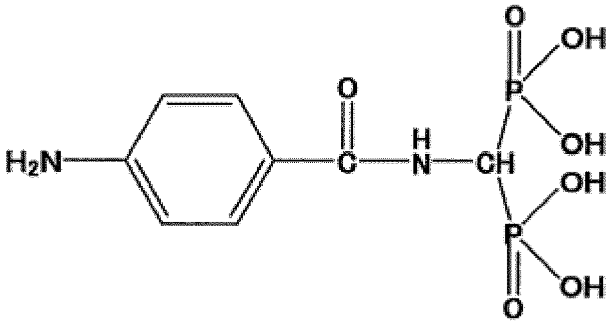

Chemical formula 5

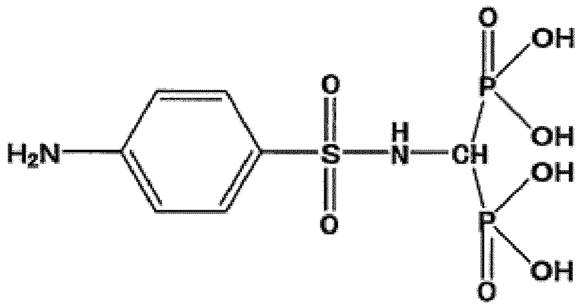

Chemical formula 6

There is no specific limit to the ratio of the pigment modified by a geminalbis phosphonic acid group or a geminalbis phosphonate group in the thus-obtained pigment dispersion element. It is preferable that the ratio is large and normally about 50 % by weight or more. The ratio of the modified pigment can be calculated by the result of element analysis.

In addition, it is possible to use a modified pigment into which a group other than a geminalbis phosphonic acid group or a geminalbis phosphonate group is introduced but image gloss, abrasion resistance, and ethanol resistance tend to deteriorate as in Examples described later.

Optionally, a pH regulator can be added to the thus-obtained pigment dispersion element. It is possible to use the same pH regulator as the pH regulator for ink described later. Of these, a pH regulator containing $Na^+$, $N(CH_3)_4^+$, $N(C_2H_5)_4^+$, $N(C_3H_7)_4^+$, or $N(C_4H_9)_4^+$ is preferable.

Upon treatment of a pH regulator, at least part of the compound represented by chemical formula 5 or 6 is changed into a salt thereof (which corresponds to a compound represented by chemical formula 3 or 4).

The addition amount of the pigment in ink is preferably from about 0.1 % by weight to about 10 % by weight and more preferably from about 1 % by weight to about 10 % by weight. When the addition amount is within the range of from 0.1 % by weight to 10 % by weight, a sufficient pigment concentration is obtained, thereby improving image quality and discharging property.

The surface area of a pigment is preferably from about 10 $m^2/g$ to about 1,500 $m^2/g$, more preferably from about 20 $m^2/g$ to about 600 $m^2/g$, and furthermore preferably about 50 $m^2/g$ to about 300 $m^2/g$.

Unless a pigment having such a suitable surface area is available, it is suitable to reduce the size of the pigment or pulverize it by using, for example, a ball mill, a jet mill, or ultrasonic wave to have a relatively small particle diameter.

The volume average particle diameter ($D_{50}$) in the pigment in ink is preferably from 10 nm to 200 nm and more preferably from 20 nm to 150 nm. The particle diameter being 200 nm or less is preferable because the pigment dispersion stability of ink is good, the dispersion stability thereof is excellent, and image quality such as image density ameliorates.

In addition, when the particle diameter is 10 nm or greater, it is possible to manufacture ink having stable dispersion stability and good spraying property for a printer without complicated dispersion operations or classification operations in an economic manner.

Hydrosoluble Organic Solvent

There is no specific limit to the hydrosoluble organic solvent for use in the ink of the present disclosure.

Specific examples of the hydrosoluble organic solvent include, but are not limited to, polyols such as ethylene glycol, diethylene glycol, 1,2-propane diol, 1,3-propane diol, 1,2-butane diol, 1,3-butane diol, 2,3-butane diol, 3-methyl-1,3-butane diol, triethylene glycol, polyethylene glycol, polypropylene glycol, dipropylene glycol, tripropylene glycol, polypropylene glycol, 1,5-pentane diol, 1,6-hexane diol, 2-ethyl-1,3-hexane diol, glycerin, 1,2,3-butane triol, 1,2,4-butane triol, 1,2,6-hexane triol, and petriol; polyol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; polyol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethylimidazolidinone, ε-caprolactam, and γ-butyrolactone; amides such as formamide, N-methylformamide, and N,N-dimethylformamide; amines such as monoethanolamine, diethanolamine, triethanolamine, monoethylamine, diethylamine, and triethylamine; sulfur-containing compounds such as dimethyl sulfoxide, sulfolane, and thiodiethanol; propylene carbonate, and ethylene carbonate.

Of these, in terms of the compatibility with a polycarbonate-based urethane resin and ink having a good layer forming property, 1,2-propane diol, 1,3-propane diol, 1,2-butane diol, 1,3-butane diol, and 2,3-propane diol are particularly preferable to obtain excellent image gloss.

The total amount of the hydrosoluble organic solvent in ink is preferably from 20 % by weight to 70 % by weight and more preferably from 30 % by weight to 60 % by weight.

When the total amount is 20 % by weight or more, ink is not dried, so that sufficient discharging property is obtained. When the total amount is 70 % by weight or less, good discharging property is obtained.

Surfactant

As for the ink of the present disclosure, a surfactant can be added so as to secure wettability to a recording medium.

The addition amount of a surfactant to ink is preferably from 0.1 % by weight to 5 % by weight. When the content of a surfactant is 0.1 % by weight or more, wettability to a non-porous substrate is sufficient, thereby improving image quality. When the content of a surfactant is 5 % by weight or less, ink is discharged without foaming.

There is no specific limit to the selection of a surfactant satisfying the condition of the addition amount mentioned above. Any of ampholytic surfactants, nonionic surfactants, and anionic surfactants can be used.

Considering the relation between the dispersability of a coloring material and image quality, nonionic surfactants are preferable such as polyoxyethylene alkyl phenyl ether, polyoxyethylene alkyl ester, polyoxyethylene alkyl amine, polyoxyethylene alkyl amide, polyoxyethylene propylene block polymer, sorbitan aliphatic esters, polyoxyethylene sorbitan aliphatic acid esters, and adducts of acetylene alcohol with ethylene oxides. In addition, it is possible to add a fluorine-containing surfactant or silicone-based surfactant depending on prescription.

Other Additives

In addition to the ink compositions mentioned above, it is possible to add an additive such as a preservatives and fungicides, a corrosion inhibitor, or a pH regulator.

Specific examples of preservatives and fungicides include, but are not limited to, 1,2-benzisothiazoline-3-on, sodium benzoate, dehydrosodium acetate, sodium sorbate, pentachlorophenol sodium, and 2-pyridine thiol-1-oxide sodium.

Specific examples of the corrosion inhibitors include, but are not limited to, acid sulfite, thiosodium sulfate, ammonium thiodiglycolate, diisopropyl ammonium nitrite, pentaerythritol tetranitrate, and dicyclohexyl ammonium nitrite.

There is no specific limit to the selection of pH regulator and any material that can adjust to a particular pH without an adverse impact on ink can be used as pH regulator.

Specific examples thereof include, but are not limited to, hydroxides of alkali metal elements such as lithium hydroxide, sodium hydroxide, and potassium hydroxide; carbonates of alkali metals such as lithium carbonate, sodium carbonate, and potassium carbonate; hydroxides of quaternary ammonium, amines such as diethanol amine and triethanol amine; ammonium hydroxide, and hydroxides of quaternary phosphonium.

The ink of the present disclosure is manufactured by dissolving or dispersing the ink composition mentioned above in an aqueous medium followed by optional mixing and stirring.

Mixing and stirring can be conducted by a typical stirrer using a stirring wing, a magnetic stirrer, a high performance disperser, etc.

The ink of the present disclosure is used in any printer having such as a piezoelectric element type in which ink droplets are discharged by transforming a vibration plate that forms the wall of the ink flowing path using a piezoelectric element as a pressure generating device to press the ink in the ink flowing path as described in JP-H2-51734-A; a thermal type in which bubbles are produced by heating ink in the ink flowing path with a heat element as described in JP-S61-59911-A; and an electrostatic type in which ink droplets are discharged by changes of the volume in the ink flowing path caused by transforming a vibration plate that forms the wall surface of the ink flowing path by a force of electrostatic generated between the vibration plate and the electrode while the vibration plate and the electrode are provided facing each other as described in JP-H6-71882-A. Of these, the ink is particularly suitable for the piezoelectric element type.

When the ink of the present disclosure is applied to a non-porous substrate, an image having good image gloss and image toughness is produced. Of the non-porous substrates, plastic film such as vinyl chloride resin film, PET film, and polycarbonate film are suitable.

Also, the ink demonstrates good performance on other non-porous substrates and conventionally-used porous media such as plain paper and inorganic coated porous media.

The ink of the present disclosure can be used to print high quality images on the non-porous medium mentioned above. It is more preferable to heat the recording medium after printing in order to form an image with higher quality, abrasion resistance, attachability and demonstrate high performance under high speed performance conditions.

The non-porous substrate in the present disclosure means a substrate having a surface having low water permeation, absorption, and/or attachability and includes a substrate having multiple voids inside but not open to the outside. This substrate is defined as having a water absorption amount of 10 $mL/m^2$ or less from a start of contact with water to 30 $msec^{1/2}$ thereafter in the Bristow method described in the regulation No. 51 of "Paper and Board Paper - Liquid absorption test method - Bristow method) of "JAPAN TAPPI paper pulp test method of year of 2000 version".

As a heater to heat a medium, many known devices can be used. Specific examples thereof include, but are not limited to, devices for forced-air heating, radiation heating, conduction heating, or microwave drying. These can be used alone or in combination. The heating temperature can be changed depending on the kind and amount of a hydrosoluble organic solvent contained in ink and the lowest layer forming temperature of an added polycarbonate-based urethane resin emulsion. It also can be changed depending on the kind of printed substrate.

The heating temperature is preferably from 30 °C to 110 °C and more preferably from 40 °C to 90 °C. Within the range of from 30 °C to 110 °C, a medium can be suitably dried and a printed substrate incurs no damage. In addition, it is possible to avoid non-discharging ascribable to temperature rising of an ink head.

An inkjet recording device that is capable of recording using the ink of the present disclosure is described in detail with reference to the accompanying drawings. In addition, paper is used in this description but other porous substrates and non-porous substrates can be used. Furthermore, the inkjet recording device includes a serial type (shuttle type) in which a carriage scans and a line type having a line type head. FIG. 1 is a schematic diagram illustrating an example of a serial type inkjet recording device.

An inkjet recording device 101 has a sheet feeding tray 102 installed onto the inkjet recording device 101, a discharging tray 103, and an ink cartridge inserting portion 104. On the upper surface of the ink cartridge inserting portion 104 is arranged an operating unit 105 such as operation keys and a display. The ink cartridge inserting portion 104 has a front cover 115 that is openable and closable to detach and attach an ink cartridge 201. "111" represents an upper cover and "112" represents the front of the front cover.

Inside the inkjet recording device 101, as illustrated in FIG. 2, a guide rod 131 serving as a guiding member that laterally bridges side plates provided on the right side and left side and a stay 132 hold a carriage 133 slidably movable in the main scanning direction. A main scanning motor moves the carriage 133 for scanning.

The carriage 133 has a recording head 134 having four inkjet recording heads that discharge ink droplets of each color of yellow (Y), cyan (C), magenta (M), and black (Bk) while multiple ink discharging mouths are arranged in the direction crossing the main scanning direction with the ink droplet discharging direction downward.

As the heads for inkjet recording that form the recording head 134, it is possible to use a device having an energy-generating device to discharge ink such as a piezoelectric actuator such as a piezoelectric element, a thermal actuator that utilizes the phase change caused by film boiling of liquid using an electric heat conversion element such as a heat element, a shape-memory alloy actuator that uses the metal phase change due to the temperature change,

and an electrostatic actuator that uses an electrostatic force.

The carriage 133 has sub tanks 135 for colors to supply each color ink to the recording head 134. The ink for inkjet recording of the present disclosure is supplied and replenished to the sub tank 135 from the ink cartridge 201 mounted onto the ink cartridge inserting unit 104 via a tube for supplying ink.

A sheet feeding unit to feed a sheet 142 loaded on a sheet loader (pressure plate) 141 of the sheet feeder tray 102 includes a half-moon shape roller (sheet feeding roller 143) to separate and feed the sheet 142 one by one from the sheet loader 141 and a separation pad 144 that is made of a material having a large friction index and arranged facing the sheet feeding roller 143 while biased to the side of the sheet feeding roller 143.

A transfer unit to transfer the sheet 142 fed from the sheet feeding unit on the lower side of the recording head 134 includes a transfer belt 151 to electrostatically adsorb and transfer the sheet 142, a counter roller 152 to transfer the sheet 142 fed from the sheet feeding unit via a guide 145 while pinching the sheet 142 with the transfer belt 151, a transfer guide 153 to make the sheet 142 track on the transfer belt 151 by changing the transfer direction of the sheet 142 being sent substantially vertically upward by substantially 90 °, a front end pressure roller 155 biased towards the transfer belt 151 by a pressure member 154, and a charging roller 156 to charge the surface of the transfer belt 151.

The transfer belt 151 has an endless form, stretched between a transfer roller 157 and a tension roller 158 and rotatable in the belt transfer direction. This transfer belt 151 include, for example, a top layer serving as a non-porous substrate adsorption surface made of a resin material such as a copolymer (ETFE) of tetrafluoroethylene and ethylene with no resistance control treatment while having a thickness about 40 $\mu$m and a bottom layer (moderate resistance layer, earth layer) made of the same material as the top layer with resistance control treatment with carbon.

On the rear side of the transfer belt 151, a guiding member 161 is arranged corresponding to the printing area by the recording head 134. A discharging unit to discharge the sheet 142 on which images are recorded by the recording head 134 includes a separation claw 171 to separate the sheet 142 from the transfer belt 151, a discharging roller 172, and a discharging roller 173. The sheet 142 is dried by heat wind by a fun heater 174 and thereafter output to a discharging tray 103 arranged below the discharging roller 172.

A duplex printing sheet feeding unit 181 is detachably attached to the rear side of the inkjet recording device 101.

The duplex printing sheet feeding unit 181 takes in and reverses the sheet 142 that is returned by the reverse rotation of the transfer belt 151 and feeds it again between the counter roller 152 and the transfer belt 151. A manual sheet feeding unit 182 is provided on the upper surface of the duplex printing sheet feeding unit 181

In this inkjet recording device, the sheet 142 is separated and fed from the sheet feeding unit one by one substantially vertically upward, guided by the guide 145, and transferred while being pinched between the transfer belt 151 and the counter roller 152.

Furthermore, the front end is guided by the transfer guide 153 and pressed against the transfer belt 151 by the front end pressure roller 155 to change the transfer direction substantially 90 °. Since the transfer belt 157 is charged by the charging roller 156 at this point in time, the sheet 142 is electrostatically adsorbed to the transfer belt 151 and transferred.

By driving the recording head 134 according to the image signal while moving the carriage 133, the ink droplet is discharged to the sheet 142 not in motion to record an image for an amount corresponding to one line and thereafter the sheet 142 is transferred in a predetermined amount to conduct recording for the next line. On receiving a signal indicating that the recording completes or the rear end of the sheet 142 has reached the image recording area, the recording operation stops and the sheet 142 is discharged to the discharging tray 103.

Having generally described preferred embodiments of this invention, further understanding can be obtained by reference to certain specific examples which are provided herein for the purpose of illustration only and are not intended to be limiting. In the descriptions in the following examples, the numbers represent weight ratios in parts, unless otherwise specified.

## EXAMPLES

Next, the present invention is described in detail with reference to Examples and Comparative Examples but not limited thereto.

### Preparation of Polycarbonate-based Urethane Resin Emulsion A

1,500 g of polycarbonate diol (reaction product of 1,6-hexane diol and dimethyl carbonate), 220 g of 2,2-dimethylol propionic acid (DMPA), and 1,347 g of N-methyl pyrrolidone (NMP) were placed in a reaction container equipped with a stirrer, a reflux cooling tube, and a thermometer in a nitrogen atmosphere followed by heating to 60 °C to dissolve DMPA.

Thereafter, 1,445 g of 4,4'-dicyclohexyl methane diisocyanate and 2.6 g of dibutyl tin dilaurylate (catalyst) were added followed by heating to 90 °C to conduct urethanification reaction in five hours, thereby obtaining an urethane

prepolymer having an isocyanate group at its end. This reaction mixture was cooled down to 80°C. 149 g of triethylamine was admixed therewith. 4,340 g was extracted from the admixed mixture and added to a liquid mixture of 5,400 g of water and 15 g of triethyl amine while being vigorously stirred.

Thereafter, 1,500 g of ice and 626 g of 35 % 2-methyl-1,5-pentane diamine aqueous solution were added to conduct chain elongation reaction followed by distilling away of the solvent in such a manner that the solid portion concentration was 30 % to obtain polycarbonate-based urethane resin emulsion A.

This emulsion A was applied to a slide glass to have a layer thickness of 10 μm. The layer was dried at 100 °C for 30 minutes to form a resin film. The Martens hardness of the resin film was 120 $N/mm^2$ when a Berkovich indenter was pressed in under a load of 9.8 mN using a micro surface hardness tester (FISCHERSCOPE HM2000, manufactured by Fischer Instruments K.K. Japan).

Preparation of Polycarbonate-based Urethane Resin Emulsion B

Polycarbonate-based urethane resin emulsion B was obtained in the same manner as in the preparation of the emulsion A except that 4,4'-dicyclohexyl methane diisocyanate was changed to hexamethylene diisocyanate.

A resin film of the emulsion B was prepared and measured in the same manner as described above. The Martens hardness thereof was 88 $N/mm^2$.

Preparation of Polycarbonate-based Urethane Resin Emulsion C

Polycarbonate-based urethane resin emulsion C was obtained in the same manner as in the preparation of the emulsion A except that 4,4'-dicyclohexyl methane diisocyanate was changed to a mixture of isophorone diisocyanate and dodeca methylene diisocyanate with a molar ratio of 6 : 4.

A resin film of the emulsion C was prepared and measured in the same manner as described above. The Martens hardness thereof was 105 $N/mm^2$.

Preparation of Polycarbonate-based Urethane Resin Emulsion D

Polycarbonate-based urethane resin emulsion D was obtained in the same manner as in the preparation of the emulsion C except that 4,4'-dicyclohexyl methane diisocyanate was changed to a mixture of isophorone diisocyanate and dodeca methylene diisocyanate with a molar ratio of 3 : 7.

A resin film of the emulsion D was prepared and measured in the same manner as described above. The Martens hardness thereof was 92 $N/mm^2$.

Preparation of Surface Modified Black Pigment Dispersion Element 1

100 g of Black Pearls® 1000 (carbon black having a BET specific surface area of 343 $m^2/g$ and a DBPA of 105 mL/100g, manufactured by Cabot Corporation), 100 mmol of the compound represented by the chemical formula 5, and 1 litter of deionized water were mixed by a Silverson Mixer at 6,000 rpm in room temperature environment. 30 minutes later, 100 mmol of sodium nitrite dissolved in a minute amount of deionized water was slowly added to the mixture. Furthermore, the system was heated to 60 °C to conduct reaction for one hour while being stirred to produce a pigment in which the compound represented by the chemical formula 5 was added to carbon black. Thereafter, pH of the pigment was regulated to 10 by NaOH aqueous solution. 30 minutes later, a pigment dispersion element was obtained. By this pH regulation, at least part of the compound represented by chemical formula 5 was changed to a compound having a group represented by chemical formula 3 in which $X^+$ was $Na^+$.

Next, the pigment dispersion element and deionized water were ultrafiltrated by using dialysis membrane followed by ultrasonic dispersion to obtain a pigment dispersion element in which solid portions were condensed to 20 % to obtain a surface modified black pigment dispersion element 1.

The surface-treatment degree of the pigment was 0.75 mmol/g, the volume average particle diameter ($D_{50}$)measured by a particle size analyzer (NANOTRAC UPA-EX-150, manufactured by Nikkiso Co., Ltd.) was 120 nm, the sodium ion content measured by ion meter (IM-32P, manufactured by DKK-TOA Corporation) was 27,868 ppm, and the content of phosphorus was 2.31 % by element analysis.

Preparation of Surface Modified Black Pigment Dispersion Element 2

A pigment dispersion element was obtained in the same manner as in preparation of surface reformed black pigment dispersion element 1 except that the amount of the compound represented by chemical formula 5 was changed to 80 mmol and NaOH aqueous solution for pH regulation was changed to 25 % ammonium water. By this pH regulation,

at least part of the compound represented by chemical formula 5 was changed to a compound having a group represented by chemical formula 3 in which $X^+$ was $NH_4^+$.

Next, the pigment dispersion element and deionized water were ultrafiltrated by using dialysis membrane followed by ultrasonic dispersion to obtain a pigment dispersion element in which solid portions were condensed to 20 % to obtain a surface modified black pigment dispersion element 2.

The surface-treatment degree of the pigment was 0.61 mmol/g, the volume average particle diameter (D50) measured by a particle size analyzer (NANOTRAC UPA-EX-150, manufactured by Nikkiso Co., Ltd.) was 131 nm, and the content of phosphorus by element analysis was 1.83 %.

Preparation of Surface Modified Black Pigment Dispersion Element 3

A pigment dispersion element was obtained in the same manner as in preparation of surface reformed black pigment dispersion element 1 except that the compound represented by chemical formula 5 was changed to the compound represented by chemical formula 6 and NaOH aqueous solution for pH regulation was changed to KOH aqueous solution. By this pH regulation, at least part of the compound represented by chemical formula 6 was changed to a compound having a group represented by chemical formula 4 in which $X^+$ was $K^+$.

Next, the pigment dispersion element and deionized water were ultrafiltrated by using dialysis membrane followed by ultrasonic dispersion to obtain a pigment dispersion element in which solid portions were condensed to 20 % to obtain a surface modified black pigment dispersion element 3.

The surface-treatment degree of the pigment was 0.75 mmol/g, the volume average particle diameter ($D_{50}$) measured by a particle size analyzer (NANOTRAC UPA-EX-150, manufactured by Nikkiso Co., Ltd.) was 115 nm, and the content of phosphorus was 2.20 % by element analysis.

Preparation of Surface Modified Black Pigment Dispersion Element 4

A pigment dispersion element was obtained in the same manner as in preparation of surface reformed black pigment dispersion element 1 except that 100 mmol the compound represented by chemical formula 5 was changed to 120 mmol of the compound represented by chemical formula 6 and NaOH aqueous solution for pH regulation was changed to 25 % ammonium water. By this pH regulation, at least part of the compound represented by chemical formula 6 was changed to a compound having a group represented by chemical formula 4 in which $X^+$ was $NH_4^+$.

Next, the pigment dispersion element and deionized water were ultrafiltrated by using dialysis membrane followed by ultrasonic dispersion to obtain a pigment dispersion element in which solid portions were condensed to 20 % to obtain a surface modified black pigment dispersion element 4.

The surface-treatment degree of the pigment was 0.91 mmol/g, the volume average particle diameter ($D_{50}$) measured by a particle size analyzer (NANOTRAC UPA-EX-150, manufactured by Nikkiso Co., Ltd.) was 98 nm, and the content of phosphorus was 2.94 % by element analysis.

Preparation of Surface Modified Magenta Pigment Dispersion Element

100 g of Pigment Red 122 manufactured by SUN CHEMICAL COMPANY LTD., 50 mmol of the compound represented by chemical formula 6, and 1 L of deionized water were mixed at room temperature by a Silverson mixer at 6,000 rpm. 30 minutes later, 100 mmol of sodium nitrite dissolved in a minute amount of deionized water was slowly added to the mixture. While being further stirred, the system was heated to 60 °C to conduct reaction for one hour, thereby obtaining a pigment in which the compound represented by chemical formula 6 was added to Pigment Red 122.

Next, the pH of the pigment was changed to 10 with tetramethyl ammonium hydroxide, thereby obtaining a pigment dispersion element 30 minutes later.

By this pH regulation, at least part of the compound represented by chemical formula 6 was changed to a compound having a group represented by chemical formula 4 in which $X^+$ was $N(CH_3)_4^+$.

Next, the pigment dispersion element and deionized water were ultrafiltrated by using dialysis membrane followed by ultrasonic dispersion to obtain a pigment dispersion element in which solid portions were condensed to 20 % to obtain a surface modified magenta pigment dispersion element.

The surface-treatment degree of the pigment was 0.50 mmol/g, the volume average particle diameter ($D_{50}$) measured by a particle size analyzer (NANOTRAC UPA-EX-150, manufactured by Nikkiso Co., Ltd.) was 111 nm, and the content of phosphorus was 0.26 % by element analysis.

Preparation of Surface Modified Cyan Pigment Dispersion Element

690 g of SMART Cyan 3154BA (Pigment Blue 15:4 surface treated dispersion element; Solid portion: 14.5 %,

manufactured by SENSIENT Corporation), 50 mmol of the compound represented by chemical formula 5, and 500 mL of deionized water were mixed in room temperature environment by a mixer (Silverson) at 6,000 rpm. 30 minutes later, 100 mmol of sodium nitrite dissolved in a minute amount of deionized water was slowly added to the mixture. While being further stirred, the system was heated to 60 °C to conduct reaction for one hour, thereby obtaining a pigment in which the compound represented by chemical formula 5 was added to Pigment Blue 15:4. Next, the pH of the pigment was changed to 10 with tetramethyl ammonium hydroxide, thereby obtaining a pigment dispersion element 30 minutes later. By this pH regulation, at least part of the compound represented by chemical formula 5 was changed to a compound having a group represented by chemical formula 3 in which $X^+$ was $N(CH_3)_4^+$.

Next, the pigment dispersion element and deionized water were ultrafiltrated by using dialysis membrane followed by ultrasonic dispersion to obtain a pigment dispersion element in which solid portions were condensed to 20 % to obtain a surface modified cyan pigment dispersion element.

The surface-treatment degree of the pigment was 0.50 mmol/g, the volume average particle diameter ($D_{50}$) measured by a particle size analyzer (NANOTRACk UPA-EX-150, manufactured by Nikkiso Co., Ltd.) was 113 nm, and the content of phosphorus was 0.27 % by element analysis.

Preparation of Surface Reformed Yellow Pigment Dispersion Element

690 g of SMART Yellow 3074BA (Pigment Yellow 74 surface treated dispersion element; Solid portion: 14.5 %, manufactured by SENSIENT Corporation), 50 mmol of the compound represented by chemical formula 6, and 500 mL of deionized water were mixed in room temperature environment by a mixer (Silverson) at 6,000 rpm. 30 minutes later, 100 mmol of sodium nitrite dissolved in a minute amount of deionized water was slowly added to the mixture. While being further stirred, the system was heated to 60 °C to conduct reaction for one hour, thereby obtaining a pigment in which the compound represented by chemical formula 6 was added to Pigment Yellow 74. Next, the pH of the pigment was changed to 10 with tetramethyl ammonium hydroxide, thereby obtaining a pigment dispersion element 30 minutes later.

By this pH regulation, at least part of the compound represented by chemical formula 6 was changed to a compound having a group represented by chemical formula 4 in which $X^+$ was $N(C_4H_9)_4^+$.

Next, the pigment dispersion element and deionized water were ultrafiltrated by using dialysis membrane followed by ultrasonic dispersion to obtain a pigment dispersion element in which solid portions were condensed to 20 % to obtain a surface modified yellow pigment dispersion element.

The surface-treatment degree of the pigment was 0.50 mmol/g, the volume average particle diameter ($D_{50}$) measured by a particle size analyzer (NANOTRAC UPA-EX-150, manufactured by Nikkiso Co., Ltd.) was 142 nm, and the content of phosphorus was 0.26 % by element analysis.

Preparation of Surface Reformed Black Pigment Dispersion Element 5

100 g of Black Pearls® 1000 (carbon black having a BET specific surface area of 343 $m^2$/g and a DBPA of 105 mL/100g, manufactured by Cabot Corporation) was added to 3,000 mL of 2.5 N sodium sulfate aqueous solution. The system was heated to 60 °C and stirred at 300 rpm to conduct reaction for 10 hours for oxidization treatment. As a result, a pigment to which a carboxylic acid group was added to the surface of carbon black was obtained. The reaction liquid was filtrated and the thus-filtered carbon black was neutralized by sodium hydroxide solution followed by ultra-filtration.

Next, the pigment dispersion element and deionized water were ultrafiltrated by using dialysis membrane followed by ultrasonic dispersion to obtain a pigment dispersion element in which solid portions were condensed to 20 % to obtain a surface modified black pigment dispersion element 5.

Preparation of Carbon Black Pigment Containing Polymer Particulate Dispersion Element

Preparation of Polymer Solution A

After sufficient replacement with nitrogen gas in a flask equipped with a mechanical stirrer, a thermometer, a nitrogen gas introducing tube, a reflux tube, and a dripping funnel, 11.2 g of styrene, 2.8 g of acrylic acid, 12.0 g of lauryl methacrylate, 4.0 g of polyethylene glycol methacrylate, 4.0 g of styrene macromer, and 0.4 g of mercaptoethanol were mixed and heated to 65 °C.

Thereafter, a liquid mixture of 100.8 g of styrene, 25.2 g of acrylic acid, 108.0 g of lauryl methacrylate, 36.0 g of polyethylene glycol methacrylate, 60.0 g of hydroxyethyl methacrylate, 36.0 g of styrene macromer, 3.6 g of mercaptoethanol, 2.4 g of azobis methyl valeronitrile, and 18 g of methylethyl ketone were dripped to the flask in 2.5 hours. After dripping, a liquid mixture of 0.8 g of azobis methyl valero nitrile and 18 g of methylethyl ketone were dropped to the flask in 0.5 hours.

After aging at 65 °C for one hour, 0.8 g of azobis methyl valero nitrile was added to the flask followed by aging

for one hour. After the reaction was complete, 364 g of methylethyl ketone was added to the flask to obtain 800 g of a polymer solution A having a concentration of 50 %.

Preparation of Black Pigment Containing Polymer Particulate Dispersion Element 28 g of the polymer solution A, 42 g of carbon black (FW 100, manufactured by Evonik Industries AG), 13.6g of 1 mol/L of potassium hydroxide aqueous solution, 20 g of methylethyl ketone, and 13.6 g of deionized water were sufficiently stirred followed by mixing and kneading by a roll mill. The thus-obtained paste was placed in 200 g of deionized water; Subsequent to sufficient stirring, methylethyl ketone and water were distilled away using an evaporator. To remove coarse particles, the liquid dispersion was filtered with a polyvinylidene fluoride membrane filter having an average opening diameter of 5.0 μm under pressure to obtain a black pigment containing polymer particulates having a pigment solid portion of 15 % and a solid portion concentration of 20 %.

The volume average particle diameter ($D_{50}$) of the polymer particulate in the particulate dispersion element was 104 nm as measured by a particle size analyzer (NANOTRAC UPA-EX150, manufactured by NIKKISO CO., LTD.).

Preparation of Magenta Pigment Containing Polymer Particulate Liquid Dispersion Element

Magenta pigment containing polymer particulate dispersion element was prepared in the same manner as in black pigment containing polymer particulate dispersion element except that the pigment used was changed to Pigment Red 122. The volume average particle diameter ($D_{50}$) of the polymer particulate in the particulate dispersion element was 127 nm as measured by a particle size analyzer (NANOTRAC UPA-EX150, manufactured by NIKKISO CO., LTD.).

Preparation of Dispersant Dispersion Cyan Pigment Dispersion Element

The following recipe was preliminarily mixed and thereafter dispersed in circulation for 7 hours by a disk type bead mill (KDL type, media: zirconia ball having a diameter of 0.3 mm, manufactured by Shinmaru Enterprises Corporation) to obtain a dispersant dispersion cyan pigment dispersion element.

| | |
|---|---|
| • Pigment Blue 15:4: | 15 parts |
| • Anionic surfactant (Pionine A-51-B, manufactured by TAKEMOTO OIL & FAT Co., Ltd.): | 2 parts |
| • Deionized water: | 83 parts |

Preparation of Dispersant Dispersion Magenta Pigment Dispersion Element

Dispersant dispersion magenta pigment dispersion element was prepared in the same manner as in dispersant dispersion cyan pigment dispersion element except that the pigment used was changed to Pigment Red 122.

Preparation of Dispersant Dispersion Yellow Pigment Dispersion Element

Dispersant dispersion yellow pigment dispersion element was prepared in the same manner as in dispersant dispersion cyan pigment dispersion element except that the pigment used was changed to Pigment Yellow 74.

Each pigment dispersion element, each pigment containing polymer particulate dispersion element, each dispersant dispersion pigment dispersion element were used to manufacture inks of Examples and Comparative Examples as follows.

Example 1

After mixing and stirring the following recipe, the mixture was filtered by a polypropylene filter having an opening of 0.2 μm to manufacture ink.

| | |
|---|---|
| • Surface Modified Black Pigment Dispersion Element 1: | 20 parts |
| • Polycarbonate-based Urethane Resin Emulsion A: | 15 parts |
| • Surfactant $CH_3(CH_2)_{12}O(CH_2CH_2O)_3CH_2COOH$: | 2 parts |
| • 1,2-propane diol: | 20 parts |
| • Diethylene glycol-n-butyl ether: | 10 parts |
| • Preservatives and fungicides (PROXEL LV, manufactured by AVECIA GROUP): | 0.1 parts |
| • Deionized water: | 32.9 parts |

Example 2

Ink was manufactured in the same manner as in Example 1 except that the surface modified black pigment dispersion element 1 in Example 1 was changed to the surface modified black pigment dispersion element 2.

Example 3

Ink was manufactured in the same manner as in Example 1 except that the surface modified black pigment dispersion element 1 in Example 1 was changed to the surface modified black pigment dispersion element 3.

Example 4

Ink was manufactured in the same manner as in Example 1 except that the surface modified black pigment dispersion element 1 in Example 1 was changed to the surface modified black pigment dispersion element 4.

Example 5

After mixing and stirring the following recipe, the mixture was filtered by a polypropylene filter having an opening of 0.2 $\mu$m to manufacture ink.

| | |
|---|---|
| • Surface modified magenta pigment dispersion element: | 20 parts |
| • Polycarbonate-based Urethane Resin Emulsion A: | 15 parts |
| • Surfactant $CH_3(CH_2)_{12}O(CH_2CH_2O)_3CH_2COOH$: | 2 parts |
| • 1,3-propane diol: | 20 parts |
| • Ethylene glycol-n-hexyl ether: | 10 parts |
| • Preservatives and fungicides (PROXEL LV, manufactured by AVECIA GROUP): | 0.1 parts |
| • Deionized water: | 32.9 parts |

Example 6

After mixing and stirring the following recipe, the mixture was filtered by a polypropylene filter having an opening of 0.2 $\mu$m to manufacture ink.

| | |
|---|---|
| • Surface modified cyan pigment dispersion element: | 20 parts |
| • Polycarbonate-based Urethane Resin Emulsion C: | 15 parts |
| • Surfactant $CH_3(CH_2)_{12}O(CH_2CH_2O)_3CH_2COOH$: | 2 parts |
| • 1,2-butane diol: | 20 parts |
| • Diethylene glycol-n-butyl ether: | 10 parts |
| • Preservatives and fungicides (PROXEL LV, manufactured by AVECIA GROUP): | 0.1 parts |
| • Deionized water: | 32.9 parts |

Example 7

After mixing and stirring the following recipe, the mixture was filtered by a polypropylene filter having an opening of 0.2 $\mu$m to manufacture ink.

| | |
|---|---|
| • Surface modified yellow pigment dispersion element: | 20 parts |
| • Polycarbonate-based Urethane Resin Emulsion C: | 15 parts |
| • Surfactant $CH_3(CH_2)_{12}O(CH_2CH_2O)_3CH_2COOH$: | 2 parts |
| • 2,3-butane diol: | 20 part |
| • Ethylene glycol-n-hexyl ether: | 10 parts |
| • Preservatives and fungicides (PROXEL LV, manufactured by AVECIA GROUP): | 0.1 parts |
| • Deionized water: | 32.9 parts |

Example 8

Ink was manufactured in the same manner as in Example 1 except that 20 parts of the surface reformed black pigment dispersion element 1 in Example 1 was changed to a combinational use of 18 parts of the surface reformed black pigment dispersion element 1 and 2 parts of the surface reformed black pigment dispersion element 5.

Example 9

Ink was manufactured in the same manner as in Example 1 except that 20 parts of the surface reformed black pigment dispersion element 1 in Example 1 was changed to a combinational use of 16 parts of the surface reformed black pigment dispersion element 1 and 4 parts of the surface reformed black pigment dispersion element 5.

Example 10

Ink was manufactured in the same manner as in Example 1 except that 20 parts of the surface reformed black pigment dispersion element 1 in Example 1 was changed to a combinational use of 10 parts of the surface reformed black pigment dispersion element 1 and 10 parts of the surface reformed black pigment dispersion element 5.

Example 11

Ink was manufactured in the same manner as in Example 1 except that the polycarbonate-based urethane resin emulsion A of Example 1 was changed to polycarbonate-based urethane resin emulsion B.

Example 12

Ink was manufactured in the same manner as in Example 5 except that the polycarbonate-based urethane resin emulsion A of Example 5 was changed to polycarbonate-based urethane resin emulsion B.

Example 13

Ink was manufactured in the same manner as in Example 6 except that 1,2-butane diol was changed to 1,4-butane diol.

Example 14

Ink was manufactured in the same manner as in Example 7 except that 2,3-butane diol was changed to 3-methyl-1,3-butane diol.

Example 15

Ink was manufactured in the same manner as in Example 1 except that the polycarbonate-based urethane resin emulsion A of Example 1 was changed to polycarbonate-based urethane resin emulsion D.

Example 16

The ink of Example 1 was evaluated for abrasion resistance and ethanol resistance in the same manner as in Example 1 described later except that the solid image was dried by leaving at 25 °C for one night instead of drying at 80 °C for one hour.

Example 17

The ink of Example 1 was evaluated for image gloss, abrasion resistance and ethanol resistance in the same manner as in Example 1 described later except that, instead of a PVC film, a PET film (corona-treated surface of E-5100, manufactured by TOYOBO CO., LTD.) was used.

Example 18

The ink of Example 1 was evaluated for image gloss, abrasion resistance and ethanol resistance in the same

manner as in Example 1 described later except that, instead of a PVC film, a polycarbonate film (CARBOGLASS®POLISH, manufactured by ASAHI GLASS CO., LTD.) was used.

Example 19

The ink of Example 1 was evaluated for image gloss, abrasion resistance and ethanol resistance in the same manner as in Example 1 described later except that, instead of a PVC film, Tarpaulins (SJT-V-200F-G, manufactured by Hiraoka & Co., Ltd) was used.

Comparative Example 1

Ink was manufactured in the same manner as in Example 1 except that the polycarbonate-based urethane resin emulsion A of Example 1 was changed to acrylic-based resin emulsion (VONCOAT R-3380-E, manufactured by DIC Corporation).

Comparative Example 2

Ink was manufactured in the same manner as in Example 5 except that the polycarbonate-based urethane resin emulsion A of Example 5 was changed to ester-based urethane resin emulsion (UCOAT UWS-148, manufactured by Sanyo Chemical Industries, Ltd.).

Comparative Example 3

Ink was manufactured in the same manner as in Example 6 except that the polycarbonate-based urethane resin emulsion C of Example 6 was changed to a fluorine-containing resin emulsion (LUMIFLON® E-4500, manufactured by ASAHI GLASS CO., LTD.).

Comparative Example 4

Ink was manufactured in the same manner as in Example 7 except that the polycarbonate-based urethane resin emulsion C of Example 7 was changed to a vinylchloride-based emulsion (Vinyblan 2586, manufactured by NISSIN CHEMICAL CO., LTD.).

Comparative Example 5

Ink was manufactured in the same manner as in Example 1 except that the surface modified black pigment dispersion element 1 in Example 1 was changed to the black pigment containing polymer particulate dispersion element.

Comparative Example 6

Ink was manufactured in the same manner as in Example 5 except that the surface modified magenta pigment dispersion element in Example 5 was changed to the magenta pigment containing polymer particulate dispersion element.

Comparative Example 7

Ink was manufactured in the same manner as in Example 6 except that the surface modified cyan pigment dispersion element in Example 6 was changed to the dispersant dispersion cyan pigment dispersion element.

Comparative Example 8

Ink was manufactured in the same manner as in Example 7 except that the surface modified yellow pigment dispersion element in Example 7 was changed to the dispersant dispersion cyan pigment dispersion element.

Comparative Example 9

Ink was manufactured in the same manner as in Example 1 except that the surface modified black pigment dispersion element 1 in Example 1 was changed to the surface reformed black pigment dispersion element 47.

Comparative Example 10

Ink was manufactured in the same manner as in Example 1 except that the surface modified black pigment dispersion element 1 in Example 1 was changed to the surface modified black pigment dispersion element 5.

Properties of each ink manufactured in Examples and Comparative Examples were evaluated as follows: The results are shown in Tables 1 and 2.

Evaluation of Image Gloss

An inkjet printer (IPSiO GXe5500, manufactured by Ricoh Co., Ltd.) was filled with each ink and a solid image was printed on a polyvinyl chloride (PVC) film (IJ5331, manufactured by Sumitomo 3M Limited) followed by drying at 80 °C for one hour.

Thereafter, gloss at 60 °degree of the solid image portion was measured by a gloss meter (4501, manufactured by BYK Gardener) and evaluated according to the following criteria.

Evaluation Criteria

A: Gloss at 60 ° 100% or more
B: Gloss at 60 ° from 80 % to less than 100 %
C: Gloss at 60 ° from 60% to less than 80%
D: Gloss at 60 ° less than 60%

Evaluation on Abrasion Resistance

An inkjet printer (IPSiO GXe5500, manufactured by Ricoh Co., Ltd.) was filled with each ink and a solid image was printed on a polyvinyl chloride (PVC) film (IJ5331, manufactured by Sumitomo 3M Limited) followed by drying at 80 °C for one hour.

Thereafter, the solid image portion was abraded by dried cotton (unbleached muslin No. 3) with a load of 400 g and evaluated according to the following criteria:

Evaluation Criteria

A: No change in image when abraded 50+ times
B: Slight scratch observed when abraded 50 times but causing no damage to image density with no practical problem
C: Image density degraded when abraded 21 times to 50 time
D: Image density degraded when abraded 20- times

Evaluation on Ethanol Resistance

An inkjet printer (IPSiO GXe5500, manufactured by Ricoh Co., Ltd.) was filled with each ink and a solid image was printed on a polyvinyl chloride (PVC) film (IJ5331, manufactured by Sumitomo 3M Limited) followed by drying at 80 °C for one hour.

The solid image portion was abraded by a cotton applicator impregnated in 50 % aqueous solution of ethanol. The degree of peeling of the film of the solid image portion was used to evaluate ethanol resistance according to the following criteria.

Evaluation Criteria

A: No peeling-off in solid image portion, no contamination on cotton applicator
B: No peeling-off in solid image portion but slight contamination on cotton applicator
C: Ink melted portion observed on solid image portion
D: Ink melted portion observed on solid image portion and at least one portion of PVC film exposed

Evaluation on Storage Stability

An ink cartridge was filled with each ink and stored at 65 °C for three weeks. The viscosity of the ink was measured by a viscometer (RE-80L, manufactured by TOKI SANGYO CO., LTD.) before and after the storage followed by evaluation on the state of thickening and agglomeration of the ink according to the following criteria.

Evaluation Criteria

A: Change rate of viscosity before and after storage within - 5 % to 5 %
B: Change rate of viscosity before and after storage within - 10 % to less than -5 % and more than 5 % to 10 %
C: Change rate of viscosity before and after storage within - 15% to less than -10 % and more than 10% to 15 %
D: Change rate of viscosity before and after storage less than - 15% or more than 15%

Evaluation of Discharging Stability

An inkjet printer (IPSiO GXe5500, manufactured by Ricoh Co., Ltd.) was filled with each ink and left at 10 °C and RH of 15 % for one week with the head being shut. Thereafter, the nozzle check pattern was printed to visually confirm undischarging and discharging disturbance for evaluation according to the following criteria.

Evaluation Criteria

A: No undischarging or discharging disturbance
B: Slight discharging disturbance
C: Nozzle with undischarging confirmed
D: Multiple nozzles with undischarging confirmed

Table 1

| | Examples | | | | | | | | |
|---|---|---|---|---|---|---|---|---|---|
| | 1 | 2 | 3 | 4 | 5 | 6 | 7 | 8 | 9 |
| Image gloss | A | A | A | A | A | A | A | A | A |
| Abrasion resistance | A | A | A | A | A | A | A | B | B |
| Ethanol resistance | A | A | A | A | A | A | A | B | B |
| Ink storage | A | A | A | A | A | A | A | A | A |
| Discharging stability | A | A | A | A | A | A | A | A | A |

| | Examples | | | | | | | | | |
|---|---|---|---|---|---|---|---|---|---|---|
| | 10 | 11 | 12 | 13 | 14 | 15 | 16 | 17 | 18 | 19 |
| Image gloss | B | A | A | B | B | A | A | A | A | A |
| Abrasion resistance | B | B | B | B | B | B | C | A | A | A |
| Ethanol resistance | A | B | B | A | A | A | C | A | A | A |
| Ink storage | A | A | A | B | A | A | A | A | A | A |
| Discharging stability | A | A | A | A | A | A | A | A | A | A |

Table 2

| | Comparative Examples | | | | | | | | | |
|---|---|---|---|---|---|---|---|---|---|---|
| | 1 | 2 | 3 | 4 | 5 | 6 | 7 | 8 | 9 | 10 |
| Image gloss | B | A | D | C | A | A | C | C | D | B |
| Abrasion resistance | A | A | C | A | B | B | B | B | D | B |
| Ethanol resistance | C | D | D | C | C | C | C | C | D | C |
| Ink storage | B | D | A | D | B | B | D | D | A | C |
| Discharging stability | D | B | B | C | D | D | D | D | A | C |

As seen in Tables 1 and 2, Examples 1 to 7 show good results about compatibility between the properties of formed layer and the stability of inkjet ink irrespective of the difference of counter ions of dispersion elements, color differences, the kinds of solvents, etc.

In Examples 8 to 10, modified pigments in which groups other than a geminalbis phosphonic acid group or a geminalbis phosphonate group are introduced are used in combination. Although some of the properties deteriorate, performances are good.

Since each ink of Examples 11 and 12 has no polycarbonate-based urethane resin particles containing a structure derived from at least one kind of alicyclic diisocyanate, the strength of the layer is low, which has an adverse impact on abrasion resistance and ethanol resistance in comparison with Examples 1 and 5.

Since the ink of Examples 13 and 14 use solvents other than 1,2-propane diol, 1,3-propane diol, 1,2-butane diol, 1,3-butane diol, or 2,3-butane diol, the solvents and the resins are not completely compatible, so that the ink is slightly inferior to the ink of Examples 6 or 7 about image gloss and abrasion resistance.

The ink of Example 15 contains an alicyclic isocyante and a polycarbonate-based urethane having a surface hardness of less than 100 $N/mm^2$ so that the abrasion resistance thereof is slightly inferior to that of Example 1 but the ethanol resistance of Example 15 tends to be good in comparison with Example 11.

Since the ink of Example 16 is not heated after printing, the performance thereof is inferior but still with no practical problem.

Each ink of Examples 18 and 19 is used to print an image on a substrate other than a PVC film. This indicates that the ink of the present disclosure is applicable to various substrates.

The ink of Comparative Examples 1 to 4 use suitable pigments but the resin emulsions used are other than polycarbonate-based urethane resins. Therefore, the compatibility between the performance of formed layer and the stability of ink are found to be not good.

The ink of Comparative Examples 5 and 6 use resin coated pigments, which is found to be inferior overall to the ink of Examples 1 or 2.

The ink of Comparative Examples 7 and 8 use dispersant dispersion type pigments, which is found to be significantly inferior to the ink of Examples 3 or 4 with regard to the stability of the ink.

The ink of Comparative Example 9 contains no resin emulsion, that is, no resin particles. The content of the solid portion in the ink decreases, which contributes to improvement of the stability of the ink but the ink is not fixed on a substrate. That is, the ink does not satisfy the objective of the present disclosure.

The ink of Comparative Example 10 uses a pigment dispersion element having a surface modified by a group other than the group represented by any one of the chemical formula 1 to 4. Consequently, the performance of the ink of Comparative Example 10 is inferior to Example 1.

According to the present invention, ink for aqueous inkjet recording is provided which has high gloss, excellent abrasion resistance, and excellent ethanol resistance at a printed area, and excellent storage stability and discharging stability of the ink over time when an image is printed on a non-porous substrate by using the ink. The ink of the present invention is printable on various non-porous substrates, in particular, plastic film.

Having now fully described embodiments of the present invention, it will be apparent to one of ordinary skill in the art that many changes and modifications can be made thereto without departing from the spirit and scope of embodiments of the invention as set forth herein.

## Claims

1. An ink for aqueous inkjet recording comprising:

   water;
   a hydrosoluble organic solvent;
   a pigment; and
   polycarbonate-based urethane resin particles,
   wherein the pigment comprises at least one of a geminalbis phosphonic acid group or a geminalbis phosphonate group, **characterized in that**
   the polycarbonate-based urethane resin particles have a volume average particle diameter $D_{50}$ of 500 nm or less, when measured by a particle size analyzer NANOTRAC UPA-EX150, manufactured by NIKKISO CO., LTD..

2. The ink for aqueous inkjet recording according to claim 1, **characterized in that** the pigment comprises at least one of groups represented by chemical formula 1 to chemical formula 4:

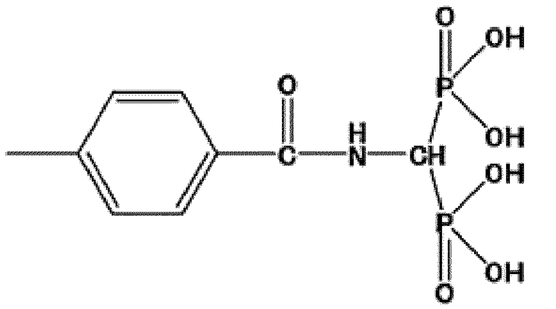

Chemical formula 1

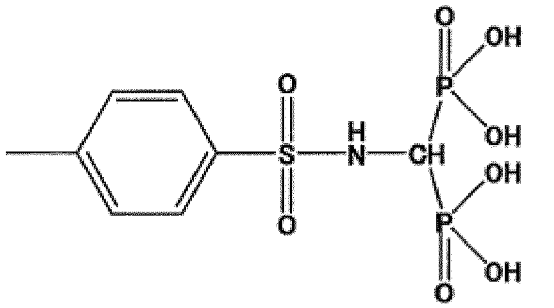

Chemical formula 2

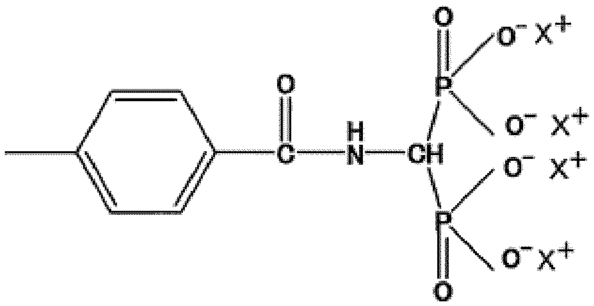

Chemical formula 3

in the chemical formula 3, $X^+$ represents $Li^+$, $K^+$, $Na^+$, $NH_4^+$, $N(CH_3)_4^+$, $N(C_2H_5)_4^+$, $N(C_{3H7})_4^+$, or $N(_C4_H9_)^{4+}$,

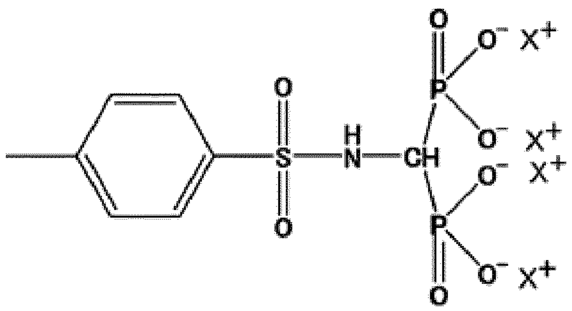

Chemical formula 4

in the chemical formula 4, $X^+$ represents $Li^+$, $K^+$, $Na^+$, $NH_4^+$, $N(CH_3)_4^+$, $N(C_2H_5)_4^+$, $N(C_{3H7})_4^+$, or $N(C_4H_9)_4^+$.

**3.** The ink for aqueous inkjet recording according to claim 1 or 2, **characterized in that** the polycarbonate-based urethane resin particles comprises a structure derived from at least one kind of alicyclic diisocyanate.

**4.** The ink for aqueous inkjet recording according to any one of claims 1 to 3, **characterized in that** the hydrosoluble organic solvent comprises at least one of 1,2-propane diol, 1,3-propane diol, 1,2-butane diol, 1,3-butane diol, or

2,3-butane diol.

5. An inkjet recording method comprising:

printing an image with the ink for aqueous inkjet recording of any one of claims 1 to 4.

6. The inkjet recording method according to claim 5, further comprising heating after the step of printing.

7. An inkjet printed matter comprising:

a recording medium; and
an image formed on the recording medium by using the ink for aqueous inkjet recording of any one of claims 1 to 4.

**Patentansprüche**

1. Tinte für wässrige Tintenstrahlaufzeichnung, umfassend:

Wasser;
ein wasserlösliches organisches Lösungsmittel;
ein Pigment; und
Urethanharzteilchen auf der Basis von Polycarbonat,
wobei das Pigment mindestens eine von einer Geminalbisphosphonsäuregruppe oder einer Geminalbisphosphonatgruppe umfasst, **dadurch gekennzeichnet, dass**
die Urethanharzteilchen auf der Basis von Polycarbonat einen volumendurchschnittlichen Teilchendurchmesser $D_{50}$ von 500 nm oder weniger aufweisen, wenn er durch einen NANOTRAC UPA-EX150-Teilchengrößenanalysator, der durch NIKKISO CO., LTD hergestellt wird, gemessen wird.

2. Tinte für wässrige Tintenstrahlaufzeichnung nach Anspruch 1, **dadurch gekennzeichnet, dass** das Pigment mindestens eine von Gruppen umfasst, die durch die chemische Formell bis zur chemischen Formel 4 dargestellt sind:

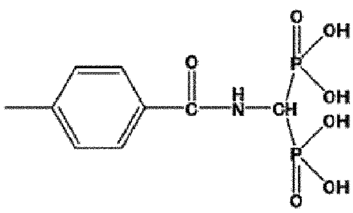

chemische Formel 1

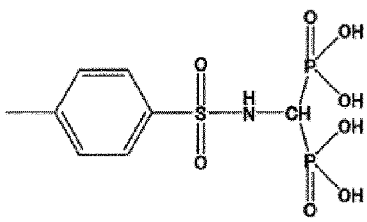

chemische Formel 2

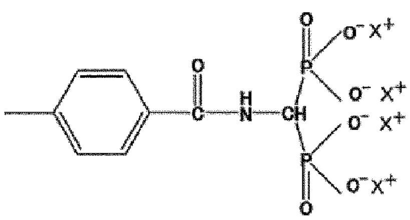

chemische Formel 3

wobei in der chemischen Formel 3 $X^+$ $Li^+$, $K^+$, $Na^+$, $NH_4^+$, $N(CH_3)_4^+$, $N(C_2H_5)_4^+$, $N(C_3H_7)_4^+$ oder $N(C_4H_9)_4^+$ darstellt,

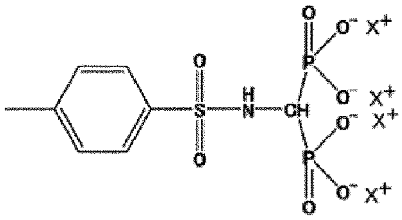

chemische Formel 4

wobei in der chemischen Formel 4 $X^+$ $Li^+$, $K^+$, $Na^+$, $NH_4^+$, $N(CF_3)_4$, $N(C_2H_5)_4^+$, $N(C_3H_7)_4^+$ oder $N(C_4H_9)_4^+$ darstellt.

3. Tinte für wässrige Tintenstrahlaufzeichnung nach Anspruch 1 oder 2, **dadurch gekennzeichnet, dass** die Urethanharzteilchen auf der Basis von Polycarbonat eine Struktur umfassen, die von mindestens einer Art von alicyclischem Diisocyanat abgeleitet ist.

4. Tinte für wässrige Tintenstrahlaufzeichnung nach irgendeinem der Ansprüche 1 bis 3, **dadurch gekennzeichnet, dass** das wasserlösliche organische Lösungsmittel mindestens eines von 1,2-Propandiol, 1,3-Propandiol, 1,2-Butandiol, 1,3-Butandiol oder 2,3-Butandiol, umfasst.

5. Tintenstrahlaufzeichnungsverfahren umfassend:

   das Drucken eines Bilds mit der Tinte für wässrige Tintenstrahlaufzeichnung nach einem der Ansprüche 1 bis 4.

6. Tintenstrahlaufzeichnungsverfahren nach Anspruch 5, ferner das Erhitzen nach dem Schritt des Druckens umfassend.

7. Mit Tintenstrahlt gedruckte Drucksache umfassend:

   ein Aufzeichnungsmedium; und
   ein Bild, das auf dem Aufzeichnungsmedium durch Verwenden der Tinte für wässrige Tintenstrahlaufzeichnung nach irgendeinem der Ansprüche 1 bis 4 gebildet ist.

## Revendications

1. Encre pour l'enregistrement par jet d'encre aqueux comprenant :

   de l'eau,
   un solvant organique hydrosoluble,
   un pigment, et
   des particules de résine uréthane à base de polycarbonate,
   dans laquelle le pigment comprend au moins l'un parmi un groupe acide bisphosphonique géminal ou un groupe bisphosphonate géminal, **caractérisée en ce que**
   les particules de résine uréthane à base de polycarbonate présentent un diamètre de particule moyen en volume $D_{50}$ de 500 nm au moins lorsque mesuré par un appareil d'analyse des tailles de particules NANOTRAC UPA-EX150 fabriqué par NIKKISO CO., LTD.

2. Encre pour l'enregistrement par jet d'encre aqueux selon la revendication 1, **caractérisée en ce que** le pigment comprend au moins l'un des groupes représentés par la formule chimique 1 jusqu'à la formule chimique 4 :

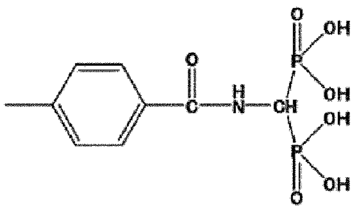

Formule chimique 1

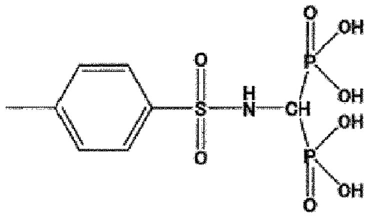

Formule chimique 2

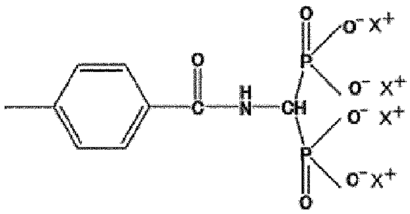

Formule chimique 3

où dans la formule chimique 3, $X^+$ représente $Li^+$, $K^+$, $Na^+$, $NH_4^+$, $N(CH_3)_4^+$, $N(C_2H_5)_4^+$, $N(C_3H_7)_4^+$, ou $N(C_4H_9)_4^+$,

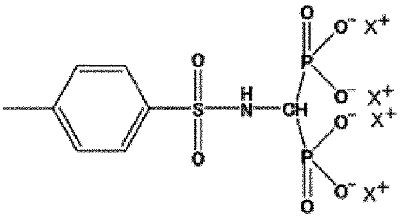

Formule chimique 4

où dans la formule chimique 4, $X^+$ représente $Li^+$, $K^+$, $Na^+$, $NH_4^+$, $N(CH_3)_4^+$, $N(C_2H_5)_4^+$, $N(C_3H_7)_4^+$, ou $N(C_4H_9)_4^+$.

3. Encre pour enregistrement par jet d'encre aqueux selon la revendication 1 ou 2, **caractérisée en ce que** les particules de résine uréthane à base de polycarbonate comprennent une structure dérivée d'au moins un type de diisocyanate alicyclique.

4. Encre pour enregistrement par jet d'encre aqueux selon l'une quelconque des revendications 1 à 3, **caractérisée en ce que** le solvant organique hydrosoluble comprend au moins l'un parmi le 1,2-propane diol, 1,3-propane diol, 1,2-butane diol, 1,3-butane diol, ou le 2,3-butane diol.

5. Procédé d'enregistrement par jet d'encre comprenant :

   l'impression d'une image avec l'encre pour l'enregistrement par jet d'encre aqueux selon l'une quelconque des revendications 1 à 4.

6. Procédé d'enregistrement par jet d'encre selon la revendication 5, comprenant en outre le chauffage après l'étape d'impression.

7. Matière imprimée par jet d'encre comprenant :

un milieu d'enregistrement ; et
une image formée sur le milieu d'enregistrement en utilisant l'encre pour l'enregistrement par jet d'encre aqueux selon l'une quelconque des revendications 1 à 4.

FIG. 1

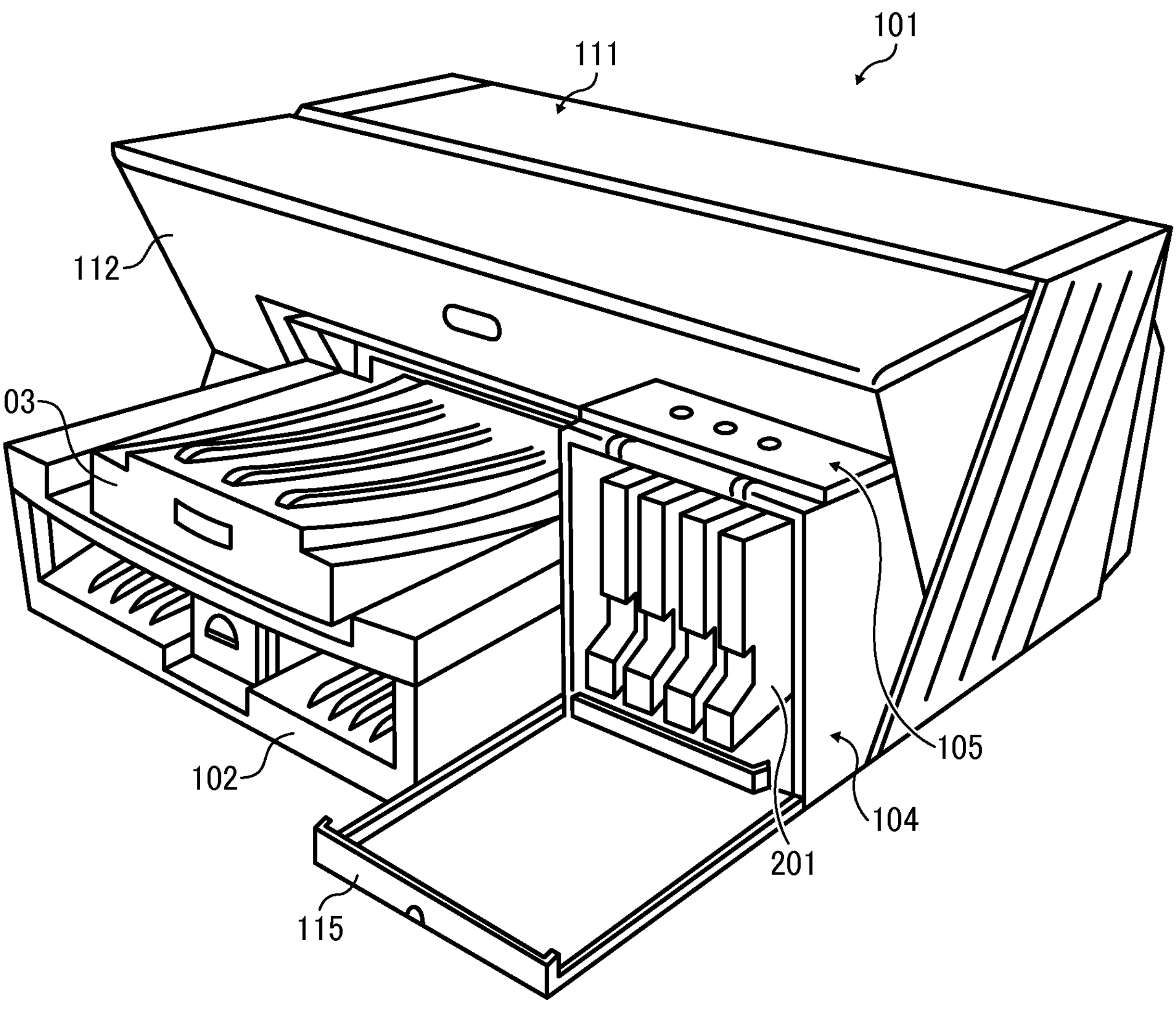

FIG. 2

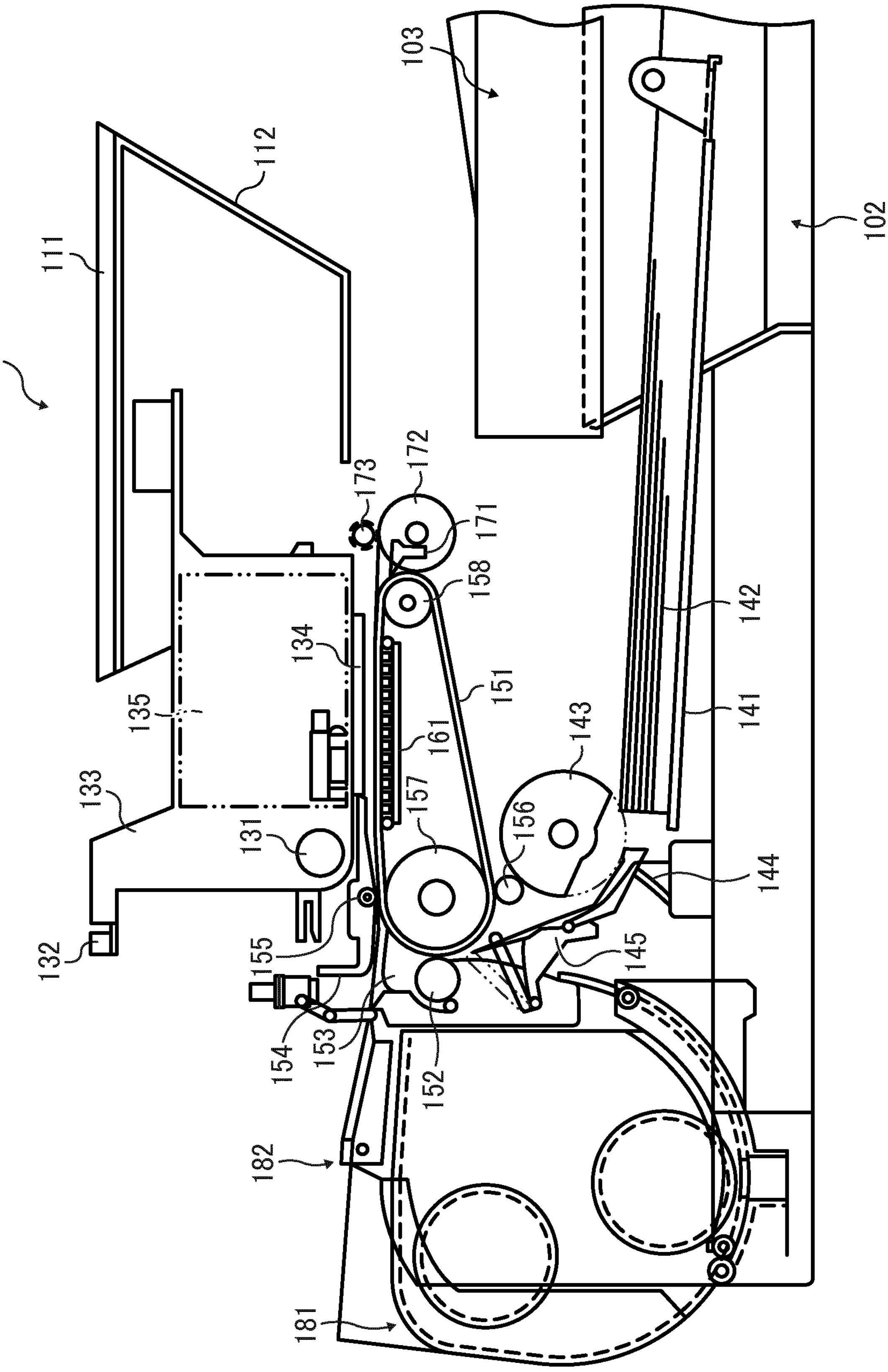
101
102
103
111
112
131
132
133
134
135
141
142
143
144
145
151
152
153
154
155
156
157
158
161
171
172
173
181
182

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005220352 A
- JP 2011094082 A
- JP 2010053328 A
- JP 2012077118 A
- JP 2012514683 A
- JP 2012207202 A
- JP H251734 A
- JP S6159911 A
- JP H671882 A